# EUROPÄISCHE PATENTSCHRIFT

(11) **EP 3 162 717 B1**
(45) Veröffentlichungstag und Bekanntmachung des Hinweises auf die Patenterteilung: **06.12.2017**
(21) Anmeldenummer: 15192007.1
(22) Anmeldetag: 29.10.2015
(51) Int. Cl.: B65B 7/16, B29C 65/18, B29C 65/00, B65B 51/14, B65B 7/28, B65B 57/00, B65B 51/10, B65B 51/32

(54) **SCHALENVERSCHLIESSMASCHINE MIT TEMPERIERVORRICHTUNG**
JACKET CLOSING MACHINE WITH A TEMPERATURE CONTROL DEVICE
MACHINE DE VERROUILLAGE DE COQUES DOTEE D'UN DISPOSITIF D'EQUILIBRAGE DES TEMPERATURES

(43) Veröffentlichungstag der Anmeldung: 03.05.2017
(73) Patentinhaber: MULTIVAC Sepp Haggenmüller SE & Co. KG, 87787 Wolfertschwenden (DE)
(72) Erfinder: MADER, Andreas, 87463 Dietmannsried (DE); HARLACHER, Dominik, 87487 Wiggensbach (DE)
(74) Vertreter: Grünecker Patent- und Rechtsanwälte PartG mbB

(56) Entgegenhaltungen:
- CH-A- 361 237
- GB-A- 2 412 625
- US-A- 2 371 257
- US-A- 5 784 858

## Beschreibung

Die Erfindung bezieht sich auf eine Schalenverschließmaschine gemäß dem Anspruch 1. Ferner betrifft die Erfindung ein Verfahren zum Kühlen eines Gehäuses einer Schalenverschließmaschine gemäß dem unabhängigen Anspruch 13.

In einer bekannten Schalenverschließmaschine des Typs T200 von Multivac ist eine Wasserkühlung integriert, die verhindert, dass Abwärme eines Siegelwerkzeugoberteils auf das Gehäuse der Schalenverschließmaschine übertragen wird und dieses unerwünscht erwärmt. Die Wasserkühlung ist effektiv, um die Temperatur des Gehäuses der Schalenverschließmaschine niedrig zu halten, setzt allerdings am Einsatzort der Schalenverschließmaschine mindestens einen Anschluss für kaltes Leitungswasser voraus. Für kleine Schalenverschließmaschinen, die vorzugsweise im Verkaufsbereich von Lebensmittelgeschäften eingesetzt werden, steht allerdings oftmals nur ein Stromanschluss zur Verfügung. Ein Wasseranschluss müsste daher erst noch für die Wasserkühlung verlegt werden. Dies ist aber nicht immer möglich und wegen des hohen zusätzlichen Aufwands nicht erstrebenswert.

Hinzu kommt, dass bei Schalenverschließmaschinen mit integrierter Wasserkühlung besondere Wärmetauscher eingesetzt werden müssen, um das in der Schalenverschließmaschine erwärmte Kühlwasser für die Rückführung in das Leitungssystem wieder auf eine bestimmte Leitungswassertemperatur zu bringen. Nachteilig daran ist, dass für den Betrieb der Wärmetauscher zusätzliche Energie benötigt wird, wodurch insgesamt die Betriebskosten der Schalenverschließmaschine in die Höhe getrieben werden.

Ohne den Einsatz geeigneter Kühlungsmittel kann sich das Gehäuse einer Schalenverschließmaschine derart erhitzen, dass ein Verletzungsrisiko für den Benutzer besteht. Die Dokumente US,784,858, GB2412625, CH361237 offenbaren weitere Beispiele von Schalenverschließmaschinen. Aufgabe der Erfindung ist es, eine Schalenverschließmaschine zur Verfügung zu stellen, die unter Verwendung einfacher, technischer konstruktiver Mittel eine effektive und kostengünstige Kühlungsfunktion bietet sowie flexibel einsetzbar ist. Aufgabe der Erfindung ist es auch, ein effektives Kühlungsverfahren für eine Schalenverschließmaschine bereitzustellen.

Diese Aufgabe wird gelöst durch eine Schalenverschließmaschine mit den Merkmalen des Anspruchs 1 bzw. durch ein Verfahren gemäß dem unabhängigen Anspruch 13. Vorteilhafte Weiterbildungen der Erfindung sind in den Unteransprüchen angegeben.

Erfindungsgemäß verfügt die Schalenverschließmaschine über ein Gehäuse mit mindestens einer Zuluft- und mindestens einer Abluftöffnung, eine Siegelvorrichtung, sowie eine Temperiervorrichtung. Die Temperiervorrichtung umfasst einen zum Ansaugen von Kühlluft ins Innere des Gehäuses mit der Zuluftöffnung verbundenen Kühlluftkanal und einen zum Abführen von Abwärme der Siegelvorrichtung von der Siegelvorrichtung zu der Abluftöffnung aufsteigenden Abluftkanal. Zudem ist bei der Erfindung in dem Abluftkanal mindestens eine Mündung vorgesehen, die den Abluftkanal mit dem Kühlluftkanal verbindet, sodass im Abluftkanal aufsteigende Abwärme (d.h. Warmluft) an der Mündung die Kühlluft mittels Sogwirkung aus dem Kühlluftkanal in den Abluftkanal hineinzieht. Dabei kommt es zu einer wirksamen Kühlung des Gehäuses ohne den Einsatz energieintensiv betriebener Kühlmittel.

Bei der Erfindung wirkt der Abluftkanal als Kamin, der einen Kühlluftstrom innerhalb des Gehäuses im Kühlluftkanal in Gang setzt. Der Abluftkanal nimmt die Abwärme der Siegelvorrichtung auf und leitet diese zur Abluftöffnung. Dadurch entsteht im Abluftkanal eine Warmluftströmung, die erfindungsgemäß dafür benutzt werden kann, eine Kühlluftströmung innerhalb des Kühlluftkanals zu erzeugen. Dies geschieht, indem die Warmluftströmung an einer im Abluftkanal vorgesehenen Öffnung vorbeizieht, an welcher der Kühlluftkanal in den Abluftkanal mündet. Die vorbeiziehende warme Luft der Warmluftströmung erzeugt dadurch an der Öffnung eine Sogwirkung, die kühle Luft aus dem Kühlluftkanal in den Abluftkanal anzieht. Die Sogwirkung kann sich entlang des gesamten Kühlluftkanals bis zu der Zuluftöffnung des Gehäuses erstrecken. Dadurch kann an der Zuluftöffnung des Gehäuses Umgebungsluft in den Kühlluftkanal eingesaugt werden. Der Kühlluftstrom bewegt sich innerhalb des Gehäuses von der Zuluftöffnung bis zur Mündung und sorgt entlang dieser Strecke für eine wirkungsvolle Kühlung des Gehäuses der Schalenverschließmaschine. Die Erfindung ermöglicht es, dass das Gehäuse während des Betriebs eine zulässige Maximaltemperatur nicht überschreitet. Die zulässige Maximaltemperatur ist vor allem vom Gehäusematerial abhängig, wobei beispielsweise die zulässige Maximaltemperatur eines Edelstahlgehäuses bei 65°C liegt.

Da die Siegelstation für einen perfekten Betrieb auf einer vorbestimmten konstanten Temperatur gehalten wird, kann die Sogwirkung an der Mündung während des Betriebs der Schalenverschließmaschine automatisch aufrechterhalten werden. Der Abwärmestrom von der Siegelvorrichtung dient somit als Motor für die Kühlung. Erfindungsgemäß kann die ohnehin während des Betriebs der Schalenverschließmaschine generierte Warmluftströmung dafür benutzt werden, innerhalb des Gehäuses der Schalenverschließmaschine eine Kühlluftströmung zu erzeugen, wodurch das Gehäuse effektiv auf einer gewünscht niedrigen Temperatur gehalten werden kann, d.h. unterhalb einer zulässigen Maximaltemperatur von z.B. 60°C. Die in der Abwärme der Siegelvorrichtung gespeicherte Energie wird somit für die Erzeugung des Kühlluftstroms verwendet. Dies bietet ein hohes Energieeinsparpotential für die erfindungsgemäße Schalenverschließmaschine, weil die Temperierungsvorrichtung keine zusätzlich von außen der Schalenverschließmaschine zugeführte Energie für die Kühlung benötigt.

Da die erfindungsgemäße Schalenverschließmaschine für die Kühlung lediglich Umgebungsluft anzieht, benötigt sie auch keine besonderen Wasserzu- und -ableitungen und kann folglich vielerorts eingesetzt werden.

Die bei der Erfindung eingesetzte Temperiervorrichtung ist kostengünstig herstellbar und trägt wenig zum Gesamtgewicht der Schalenverschließmaschine bei. Außerdem kann die Temperiervorrichtung innerhalb des Gehäuses der Schalenverschließmaschine gut verbaut sein und mit bereits bestehenden Komponenten zusammenwirken, um beispielsweise den Kühlluftkanal und/oder den Abluftkanal zu bilden.

Vorzugsweise ist der Abluftkanal zumindest abschnittsweise entlang einer Rückwand der Schalenverschließmaschine ausgebildet, um darin die Warmluftströmung zur Abluftöffnung zu leiten. Da sich ein Bediener gewöhnlich während des Betriebs der Schalenverschließmaschine an einer Vorderseite der Schalenverschließmaschine aufhält, d.h. auf der gegenüberliegenden Seite von der Rückwand, kann die aus der Abluftöffnung austretende Warmluftströmung möglichst weit entfernt vom Bediener aus dem Gehäuse herausgeleitet werden und stört diesen nicht.

Vorzugsweise verfügt die Temperiervorrichtung zumindest abschnittsweise über eine gemeinsame Trennwand zwischen dem Kühlluftkanal und dem Abluftkanal, die oberhalb der Siegelvorrichtung angeordnet ist. Die gemeinsame Trennwand bietet die Doppelfunktion, sowohl Kühlluft im Kühlluftkanal als auch die Abwärmeströmung im Abluftkanal zu leiten. Die Trennwand kann aus einem Material geringer Wärmeleitfähigkeit ausgebildet sein, damit zwischen dem Kühlluftkanal und dem Abluftkanal ein Wärmeaustausch reduziert bis gar nicht stattfindet. Beispielsweise kann die Trennwand aus einem hochlegierten Stahl hergestellt sein.

In einer vorteilhaften Ausführungsvariante der Erfindung ist die Trennwand an einem Werkzeugoberteil der Siegelvorrichtung befestigt, beispielsweise lösbar angeschraubt. Dabei kann die an dem Werkzeugoberteil befestigte Trennwand zuverlässig die Abwärme der Siegelvorrichtung, insbesondere die Abwärme eines in dem Werkzeugoberteil integral verbauten Heizelements, innerhalb des Abluftkanals von der Siegelvorrichtung wegleiten. Die unmittelbar an dem Werkzeugoberteil befestigte und daher mit dem Werkzeugoberteil mitgeführte Trennwand sorgt auch dafür, dass eine konstante Warmluftströmung im Abluftkanal entsteht, sodass es am Siegelwerkzeugoberteil nicht zu wesentlichen Temperaturschwankungen kommt.

Besonders vorteilhaft ist es, wenn die Trennwand zu dem Heizelement des Werkzeugoberteils einen Abstand zwischen 5 mm und 20 mm einhält. Dies sorgt dafür, dass die Warmluftströmung mit ausreichend hoher Temperatur im Abluftkanal weitergeleitet wird. Weiterhin hat es sich gezeigt, dass anhand dieser Abstandswerte genügend Abwärme abtransportiert werden kann, ohne dass es zu einer Rückstauwärmewirkung auf das Heizelement kommt, wodurch das Halten einer konstanten Temperatur einer Siegelplatte des Siegelwerkzeugoberteils erschwert werden würde. Die Befestigung der Trennwand an dem Werkzeugoberteil mit einem Abstand von 5 mm bis 20 mm zum Heizelement hat den positiven Effekt, dass das Werkzeugoberteil, insbesondere die darin verbaute Siegelplatte, auf konstanter Temperatur gehalten werden kann. Dies ermöglicht einen hervorragenden Herstellungsprozess für Verpackungen.

Vorzugsweise umfasst die Siegelvorrichtung ein Siegelwerkzeugunterteil mit einer daran ausgebildeten Schalenaufnahme. In der Schalenaufnahme kann eine bzw. können mehrere Schalen für den Siegelvorgang bereit gehalten werden. Gemäß einer weiteren Ausführungsvariante ist das Siegelwerkzeugunterteil aus dem Gehäuse herausziehbar angeordnet. In einem herausgezogenen Zustand kann die Schalenaufnahme bestückt werden. Vorzugsweise ist am Siegelwerkzeugunterteil ein Hebel ausgebildet, der aus einer Vorderseite des Gehäuses herausragt und vom Bediener zum Herausziehen des Siegelwerkzeugunterteils ergriffen werden kann.

Das Leiten der Warmluftströmung, d.h. der Transport von Abwärme der Siegelvorrichtung innerhalb des Abluftkanals, kann dadurch verbessert werden, wenn die Trennwand an der Mündung ein Leitblech vorsieht. Das Leitblech ist vorzugsweise in Strömungsrichtung gebogen. Das Leitblech kann auch zum Ausbilden der Mündung im Abluftkanal dienen. Dafür kann das Leitblech derart zu einer anderen Wandung des Abluftkanals hingebogen sein, um dazwischen die Mündung auszubilden. Vorstellbar wäre es auch, dass das Leitblech verstellbar ist, um eine Mündungsweite einzustellen. Dadurch wäre es möglich, die Stärke der Sogwirkung zu verändern.

Vorzugsweise beträgt eine Temperatur der Abluftströmung, insbesondere an der Abluftöffnung, 70°C bis 90°C, vornehmlich 88°C. Bei solchen Temperaturwerten an der Abluftöffnung stellt sich ein besonders guter Kamineffekt ein.

Eine besonders effektive Kühlung des Gehäuses der Schalenverschließmaschine kann dadurch erreicht werden, wenn der Kühlluftkanal zwischen der Zuluftöffnung und der Mündung zumindest abschnittsweise mäanderförmig ausgebildet ist. Der dadurch längere Kühlungsweg bewirkt, dass das Gehäuse über eine große Gehäusefläche gekühlt werden kann. Somit kann das Gehäuse selbst bei hohen Temperaturen der Siegelvorrichtung auf einem niedrigen Temperaturniveau gehalten werden.

Insbesondere kann sich bei der Erfindung ein Volumenstrom der Kühlluftströmung automatisch an einen Volumenstrom der Abwärmeströmung anpassen. Ein effektiver Kühllufttransport entlang einer verlängerten Kühlungsstrecke wird insbesondere bei hohen Temperaturen der Siegelvorrichtung durch die damit verbundene erhöhte Sogleistung ermöglicht, sodass selbst bei einer mäanderförmigen Kühlungsstrecke effektiv Kühlluft durch das Gehäuse geführt werden kann. Der mäanderförmige Kühlluftkanal kann daher insbesondere bei hohen Siegeltemperaturen vorteilhaft eingesetzt werden.

Gemäß einer weiteren Ausführungsvariante der Erfindung ist der Kühlluftkanal zwischen der Zuluftöffnung und der Mündung zumindest abschnittsweise zum Leiten angesaugter Kühlluft in übereinander angeordneten Ebenen in Richtung zur Siegelvorrichtung ausgebildet. Vorzugsweise ist in Seitenansicht die Mündung zum Erzeugen der Sogwirkung innerhalb des Gehäuses der Schalenverschließmaschine unterhalb der Zuluftöffnung und oberhalb der Siegelvorrichtung vorgesehen, sodass anhand der Sogwirkung an der Mündung die Kühlluft von der Zuluftöffnung in Richtung zur darunter liegenden Siegelvorrichtung angesogen werden kann. Dabei kann zunächst die Schwerkraft der Kühlluft ausgenutzt werden, weil die an der Zuluftöffnung angesaugte Umgebungsluft noch relativ kühl ist und deshalb leichter in Richtung zur darunter angeordneten Siegelvorrichtung transportiert werden kann. Je näher die Kühlluft der Siegelvorrichtung kommt, desto mehr erhöht sich deren Temperatur. Dies wiederum hat den positiven Effekt, dass der Kühlluftstrom nahe an der Siegelvorrichtung, insbesondere im Bereich der Mündung, derart aufgewärmt ist, dass er problemlos mittels der Sogwirkung in den Abluftkanal eingesaugt werden kann, sich mit der Abluftströmung gut vermischt und mit dieser zusammen im Abluftkanal zur Abluftöffnung aufsteigt. Somit ist eine zuverlässige Kühlluftzirkulation innerhalb des Gehäuses möglich.

Vorzugsweise bildet der Kühlluftkanal zumindest zwei zueinander gegenläufig ausgerichtete Kühlstreckenabschnitte aus. Dies ermöglicht eine große effektive Kühlfläche innerhalb des Gehäuses. Dadurch wird auch erreicht, dass die ins Gehäuse gezogene Kühlluft an unterschiedlichen Bereichen bzw. Baugruppen innerhalb des Gehäuses der Schalenverschließmaschine vorbeigeleitet werden kann.

Eine besonders effektive Kühlung innerhalb des Gehäuses der Schalenverschließmaschine liegt dann vor, wenn in horizontaler Projektion der Kühlluftkanal eine im Wesentlichen gleich große Fläche (oder mindestens gleich große Fläche) wie die Siegelvorrichtung umfasst. Der Kühlluftkanal bildet dann auch eine wirksame Wärmeabschirmung für die Siegelvorrichtung, um zu verhindern, dass die Abwärme der Siegelvorrichtung nach oben in den darüber angeordneten Gehäuseraum der Schalenverschließmaschine dringt. Somit können Komponenten der Schalenverschließmaschine, die oberhalb der Siegelvorrichtung im Gehäuse verbaut sind, vor der Abwärme der Siegelvorrichtung effektiv geschützt werden.

Vorzugsweise ist die Temperiervorrichtung lüfterlos ausgeführt. Dies reduziert die Geräuschentwicklung während des Betriebs. Außerdem kann dadurch der Energieverbrauch reduziert werden. Bei der Erfindung wird das Fördern der Kühlluft innerhalb des Gehäuses durch die entstehende Sogwirkung an der Mündung erreicht. Eine zusätzliche Energiequelle ist dafür nicht nötig.

Eine weitere Ausführungsform der Erfindung sieht vor, dass die Zuluftöffnung in einer Rückwand, einer Seitenwand und/oder in einem Boden des Gehäuses ausgebildet ist. Es können auch mehrere Zuluftöffnungen im Gehäuse vorgesehen sein. Wie bereits weiter oben beschrieben wurde, wäre es vorteilhaft, wenn die Zuluftöffnung oberhalb der Siegelvorrichtung im Gehäuse der Schalenverschließmaschine vorgesehen ist, weil sich die kühle und somit auch schwerere Umgebungsluft leichter von oberhalb der Siegelvorrichtung nach unten zu dieser hin ansaugen lässt. Bei ausreichender Sogwirkung lässt sich jedoch auch ausreichend Kühlluft durch eine Zuluftöffnung am Boden ins Gehäuse einsaugen. Dies könnte den Vorteil haben, dass am Boden häufig eine kühlere Umgebungstemperatur als in einem oberen Bereich des Gehäuses vorliegt.

Vorteilhaft wäre es auch, wenn die Abluftöffnung in einem Deckel des Gehäuses ausgebildet ist, sodass das Bedienpersonal nicht durch die ausströmende Abluft gestört wird. Gemäß einer verbesserten Variante sind die Zu- und Abluftöffnung räumlich möglichst weit voneinander getrennt, vorzugsweise an gegenüberliegenden Seiten des Gehäuses ausgebildet. Dies verhindert, dass aus der Abluftöffnung austretende Warmluft an der Zuluftöffnung angesaugt wird.

Erfindungsgemäß ist weiter ein Verfahren zum Kühlen eines Gehäuses einer Schalenverschließmaschine vorgesehen. Dabei nimmt ein Abluftkanal von einer Siegelvorrichtung der Schalenverschließmaschine Abwärme auf, die innerhalb des Abluftkanals eine aufsteigende Abluftströmung erzeugt, welche im Abluftkanal zu einer im Gehäuse vorgesehenen Abluftöffnung strömt, wobei der Abluftkanal die aufsteigende Abluftströmung an einer in ihm ausgebildeten Mündung vorbeileitet, wobei an der Mündung durch die daran vorbeiziehende Abluftströmung eine Sogwirkung erzeugt wird. Die Sogwirkung bedingt den Effekt, dass aus einem mit der Mündung verbundenen Kühlluftkanal, der entlang einer vorbestimmten Kühlungsstrecke zu einer Zuluftöffnung des Gehäuses führt, Kühlluft durch die Zuluftöffnung in den Kühlluftkanal und aus diesem durch die Mündung in den Abluftkanal hineingezogen wird.

Beim erfindungsgemäßen Verfahren wird die an der Mündung erzeugte Sogwirkung als Antrieb zum Ansaugen und Zirkulieren des Kühlluftstroms durch das Gehäuse der Schalenverschließmaschine genutzt. Die an der Mündung durch die Sogwirkung in den Abluftkanal eingesaugte Kühlluft hat bereits selber eine derart erwärmte Temperatur erreicht, sodass sie sich gut mit der Warmluftströmung innerhalb des Abluftkanals vermischt und zusammen mit dieser zur Abluftöffnung aufsteigt.

Eine besonders gute Sogwirkung kann dann an der Mündung erzielt und aufrechterhalten werden, wenn die Abwärme der Siegelvorrichtung nahezu vollständig an den Abluftkanal abgegeben wird. Dies ist insbesondere durch das Vorsehen einer Trennwand zwischen dem Abluftkanal und dem Kühlluftkanal mit geringer Wärmeleitfähigkeit möglich.

Vorteilhaft ist es auch, wenn die Kühlluft durch den Kühlluftkanal zumindest abschnittsweise entlang einer mäanderförmigen Kühlungsstrecke durch das Gehäuse geführt wird, weil dadurch eine besonders große Fläche des Gehäuses gekühlt werden kann.

Vorzugsweise wird die Abwärme in horizontaler Richtung von der Siegelvorrichtung in einen an einer Rückwand des Gehäuses ausgebildeten aufsteigenden Kanalabschnitt des Abluftkanals geleitet. Der Abluftkanal weist gemäß dieser Ausführungsvariante im Wesentlichen eine L-Form auf, wobei sich der horizontale Kanalabschnitt über der Siegelvorrichtung und sich der vertikale Kanalabschnitt an der Rückwand des Gehäuses erstreckt.

Außerdem kann im zusammenlaufenden Bereich des horizontalen und des vertikalen Kanalabschnitts im Abluftkanal eine Sogwirkung erzeugt werden, weil die dort in diesem Eckbereich aufsteigende Warmluft die oberhalb der Siegelvorrichtung angesammelte Warmluft nach außen zur Rückwand hin abzieht. Dies verhindert, dass unmittelbar oberhalb der Siegelvorrichtung Abwärme gestaut wird.

Im Folgenden wird ein vorteilhaftes Ausführungsbeispiel der Erfindung anhand einer Zeichnung näher dargestellt. Im Einzelnen zeigen:
- Fig. 1: eine Seitenansicht einer erfindungsgemäßen Schalenverschließmaschine in Schnittdarstellung und
- Fig. 2: eine perspektivische Ansicht der erfindungsgemäßen Schalenverschließmaschine in Schnittdarstellung.

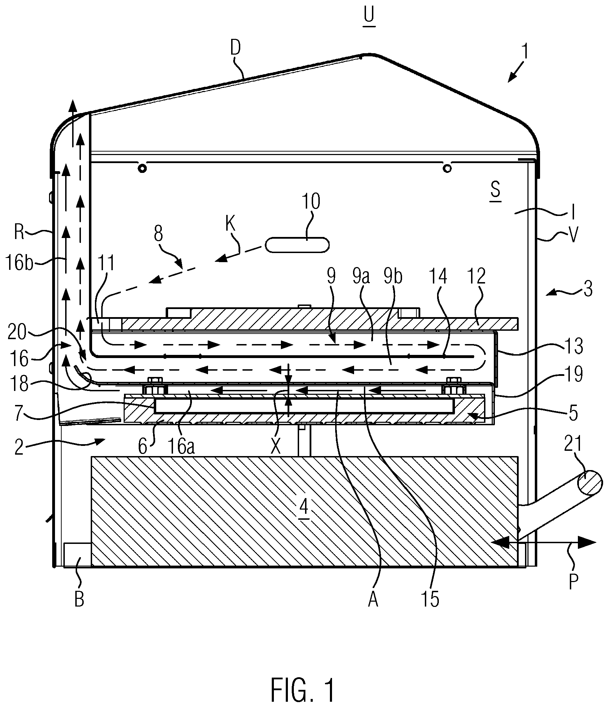

Figur 1 zeigt eine Schalenverschließmaschine 1. Die Schalenverschließmaschine 1 wird zum Versiegeln von Verpackungen verwendet. Dafür umfasst die Schalenverschließmaschine 1 eine Siegelvorrichtung 2, die innerhalb eines Gehäuses 3 der Schalenverschließmaschine 1 angeordnet ist. Die Siegelvorrichtung 2 umfasst ein Siegelwerkzeugunterteil 4 und ein Siegelwerkzeugoberteil 5. In Figur 1 ist das Siegelwerkzeugoberteil 5 relativ zum Siegelwerkzeugunterteil 4 höhenverstellbar gelagert und kann derart zum Siegelwerkzeugunterteil 4 herabgesenkt werden, dass es eine zwischen dem Siegelwerkzeugunterteil 4 und dem Siegelwerkzeugoberteil 5 geführte, in Figur 1 nicht gezeigte Oberfolie auf mindestens eine Verpackung, die im Siegelwerkzeugunterteil 4 bereitgehalten wird, presst und damit versiegelt. Das Siegelwerkzeugoberteil 5 umfasst dafür eine Siegelplatte 6 sowie ein in der Siegelplatte 6 integral eingebautes Heizelement 7 zum Erhitzen der Siegelplatte 6.

In Figur 1 ist das Siegelwerkzeugunterteil 4 aus dem Gehäuse 3 herausziehbar angeordnet. Dafür ist am Siegelwerkzeugunterteil 4 ein Hebel 21 befestigt, der aus einer Vorderwand V des Gehäuses 3 herausragt und von einem Bediener zum Herausziehen des Siegelwerkzeugunterteils 4 ergriffen werden kann. In Figur 1 ist das Siegelwerkzeugunterteil 4 nach rechts an der Vorderwand V aus dem Gehäuse 3 herausziehbar. Dies ist anhand des Pfeils P schematisch dargestellt. Somit kann das Siegelwerkzeugunterteil 4 wie eine Schublade aus dem Gehäuse 3 herausgezogen werden, um fertig hergestellte Verpackungen aus der Schalenverschließmaschine 1 zu entnehmen und um das Siegelwerkzeugunterteil 4, insbesondere eine daran ausgebildete Schalenaufnahme, mit neuen zu versiegelnden Schalen zu bestücken.

Die Schalenverschließmaschine 1 umfasst weiter eine Temperiervorrichtung 8. Die Temperiervorrichtung 8 sorgt für eine ausreichende Kühlung des Gehäuses 3 der Schalenverschließmaschine 1. Die Temperiervorrichtung 8 hat einen Kühlluftkanal 9, der in das Gehäuse 3 eingesaugte Umgebungsluft U als Kühlluftströmung K derart durch das Innere I des Gehäuses 3 führt, dass trotz einer von der Siegelvorrichtung 2 erzeugten Abwärmeströmung A das Gehäuse 3 auf einer gewünscht niedrigen Temperatur gehalten werden kann.

Bei der Schalenverschließmaschine 1 aus Figur 1 wird die Umgebungsluft U durch mindestens eine Zuluftöffnung 10 in das Innere I des Gehäuses 3 eingesaugt. Die Zuluftöffnung 10 ist in einer Seitenwand S des Gehäuses 3 ausgebildet. Figur 1 zeigt, dass im Inneren I des Gehäuses 3 die Kühlluftströmung K von der Zuluftöffnung 10 zu einem Eingang 11 und durch diesen in den Kühlluftkanal 9 gelangt. Der Eingang 11 ist in einer Deckelplatte 12 ausgebildet, die oberhalb des Kühlluftkanals 9 angeordnet ist. Der Kühlluftkanal 9 könnte sich allerdings auch bis zur Zuluftöffnung 10 erstrecken.

Gemäß Figur 1 wird der Kühlluftkanal 9 primär durch einen oberen Wandabschnitt 13 sowie durch einen Zwischenwandabschnitt 14 gebildet. Der obere Wandabschnitt 13 ist an einer Unterseite der Deckelplatte 12 befestigt. In Figur 1 ist der Kühlluftkanal 9 in zwei zueinander gegenläufig ausgerichtete Kühlstreckenabschnitte 9a, 9b durch den Zwischenwandabschnitt 14 unterteilt. Wie gut in der Figur 1 zu sehen ist, wird die Kühlluftströmung K entlang der Kühlstreckenabschnitte 9a, 9b mäanderförmig im Kühlluftkanal 9 geführt.

Weiter zeigt Figur 1 eine Trennwand 15, die an einer Oberseite des Siegelwerkzeugoberteils 5 angeschraubt ist. Die Trennwand 15 ist zwischen dem Kühlluftkanal 9 und einem Abluftkanal 16 angeordnet. Die Trennwand 15 dient vorzugsweise als Wärmeabschirmung zwischen dem Kühlluftkanal 9 und einem horizontalen ersten Kanalabschnitt 16a des Abluftkanals 16. Der horizontale erste Kanalabschnitt 16a des Abluftkanals 16 ist dafür ausgelegt, Abwärme von dem Siegelwerkzeugoberteil 5, insbesondere von dem Heizelement 7, zur Seite hin in einen damit verbundenen vertikalen zweiten Kanalabschnitt 16b des Abluftkanals 16 zu leiten, der an einer Rückwand R des Gehäuses 3 die Abwärmeströmung A nach oben zu einer Abluftöffnung 17 leitet. Gemäß Figur 1 ist die Abluftöffnung 17 in einem oberen linken Bereich eines Deckels D der Schalenverschließmaschine 1 ausgebildet.

Damit die Abwärmeströmung A gut im Abluftkanal 16 nach oben zur Abluftöffnung 17 geleitet werden kann, ist an einem seitlichen Ende der Trennwand 15 ein in Strömungsrichtung A gekrümmt nach oben gerichtetes Leitblech 18 ausgebildet. Am gegenüberliegenden Ende der Trennwand 15 ist an dieser ein nach unten zum Siegelwerkzeugunterteil 4 gerichteter Randabschnitt 19 ausgebildet. Figur 1 zeigt, dass der Randabschnitt 19 bis zu einer unteren Kante des Siegelwerkzeugoberteils 5 reicht, wodurch die vom Heizelement 7 abgegebene und aufsteigende Abwärme gut unterhalb der Trennwand 15 aufgefangen werden kann.

Weiter zeigt Figur 1, dass zwischen dem Leitblech 18 und dem Zwischenwandabschnitt 14 eine Mündung 20 ausgebildet ist. Die Mündung 20 verbindet den Kühlluftkanal 9 mit dem Abluftkanal 16. Die im Abluftkanal 16 an der Mündung 20 vorbeiziehende, zur Abluftöffnung 17 aufsteigende Abwärmeströmung A erzeugt an der Mündung 20 eine Sogwirkung, sodass Kühlluft aus dem Kühlluftkanal 9 in den vertikalen Abschnitt des Abluftkanals 16 eingesaugt wird. Die an der Mündung 20 nach oben zur Abluftöffnung 17 aufsteigende Abwärmeströmung A erzeugt daher die Kühlluftströmung K im Kühlluftkanal 9, wodurch eine effektive Kühlung des Inneren I, insbesondere des Gehäuses 3, der Schalenverschließmaschine 1 ermöglicht wird.

Die an der Zuluftöffnung 10 eingesaugte Umgebungsluft U von außerhalb des Gehäuses 3 bewegt sich entlang übereinander angeordneter Ebenen nach unten in Richtung zum Siegelwerkzeugoberteil 5, wobei die Temperatur der entlang des Kühlluftkanals 9 geleiteten Kühlluftströmung K allmählich zur Mündung 20 hin zunimmt. In der untersten Kühlluftebene, also im Kühlluftkanal 9 direkt oberhalb der Trennwand 15, hat sich die Kühlluftströmung K bereits derart erwärmt, dass sie sich nach Eintritt in den Abluftkanal 16 gut mit der Abluftströmung A vermischt und zusammen mit der Abluftströmung A nach oben zur Abluftöffnung 17 aufsteigt.

Das strömungstechnische Zusammenwirken des Abluftkanals 16 mit dem Kühlluftkanal 9 über die Mündung 20 ermöglicht eine Kühlluftzirkulation innerhalb des Gehäuses 3 ohne zusätzliche Luftfördermittel. Insbesondere kann damit auf einen Lüfter verzichtet werden. Die erfindungsgemäße Schalenverschließmaschine kann daher besonders geräuscharm betrieben werden.

Weiter zeigt Figur 1, dass die Trennwand 15 auf dem Siegelwerkzeugoberteil 5 festgeschraubt ist. Die Trennwand 15 erstreckt sich dabei über die gesamte Breite des Siegelwerkzeugoberteils 5. Außerdem zeigt Figur 1, dass die Trennwand 15 durch einen Abstand X vom Heizelement 7 beabstandet ist. Der Abstand X misst insbesondere 5mm bis 20mm. Der Abstand X kann je nach Heizleistung des Heizelements 7 variieren. Dadurch kann sichergestellt werden, dass die Abwärme vom Siegelwerkzeugoberteil 5 gut unterhalb der Trennwand 15 gesammelt und ohne Wärmerückstau zügig zur Seite hin in den vertikalen zweiten Kanalabschnitt 16b des Abluftkanals 16 abgeführt werden kann. Die zur Seite hin geleitete, energiegeladene Abluftströmung A bewirkt auch, dass das Siegelwerkzeugoberteil 5 auf einer konstanten Temperatur gehalten werden kann.

Der sich im Abluftkanal 16 einstellende Kamineffekt wirkt automatisch, sobald das Heizelement 7 des Siegelwerkzeugoberteils 5 eine ausreichende Temperatur erreicht hat. Bei Betriebstemperatur des Heizelements 7 setzt daher eine optimale Kühlung des Gehäuses 3 ein.

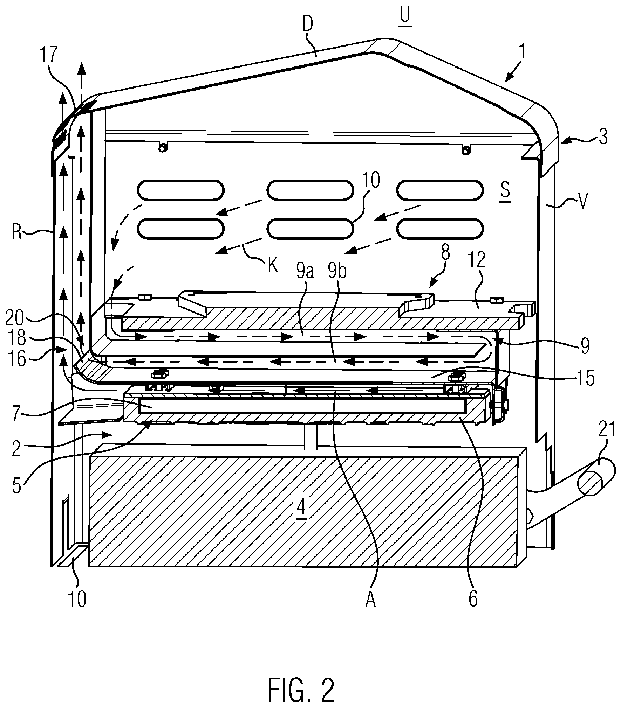

Figur 2 zeigt eine Schnittansicht durch eine Perspektivdarstellung der erfindungsgemäßen Schalenverschließmaschine 1. Auch hierin wird deutlich, dass die Abluftströmung A an der Mündung 20 vorbeizieht und damit an der Mündung 20 eine Sogwirkung erzeugt, mittels derer die Kühlluftströmung K innerhalb des Kühlluftkanals 9 in Gang gesetzt werden kann.

Vorstellbar wäre es auch, dass die oberhalb des Siegelwerkzeugoberteils 5 positionierte Trennwand 15 zumindest bereichsweise als Wärmetauscher ausgebildet ist, wodurch die oberhalb entlang der Trennwand 15 geleitete Kühlluftströmung K durch Wärmeleitung über die Trennwand 15 zusätzlich erwärmt werden könnte. Dies hätte zur Folge, dass die Kühlluftströmung K im Bereich oberhalb der Trennwand 15, insbesondere im Kanalabschnitt 9b, derart erwärmt werden könnte, dass sie leichter durch die Mündung 20 in den Abluftkanal 16 hineingezogen wird. Die vorliegende Erfindung wurde im Zusammenhang mit einer Schalenverschließmaschine beschrieben. Es wäre jedoch auch denkbar, dass das erfinderische Prinzip, wonach eine durch Abwärmeströmung erzeugte Sogwirkung innerhalb eines Kühlluftkanals eine Kühlluftströmung hervorruft, an beliebig anderen Arbeitsmaschinen zum Einsatz kommt. Dabei kann es sich vor allem um stationäre oder um mobile Arbeitsmaschinen, insbesondere Verpackungsmaschinen handeln.

## Patentansprüche

1. Schalenverschließmaschine (1), umfassend ein Gehäuse (3) mit mindestens einer Zuluft- (10) und mindestens einer Abluftöffnung (17), eine Siegelvorrichtung (2) sowie eine Temperiervorrichtung (8), die einen zum Ansaugen von Kühlluft ins Innere (I) des Gehäuses (3) mit der Zuluftöffnung (10) verbundenen Kühlluftkanal (9) und einen zum Abführen von Abwärme der Siegelvorrichtung (2) von der Siegelvorrichtung (2) zu der Abluftöffnung (17) aufsteigenden Abluftkanal (16) umfasst, in dem mindestens eine Mündung (20) vorgesehen ist, die den Abluftkanal (16) mit dem Kühlluftkanal (9) verbindet, sodass im Abluftkanal (16) aufsteigende Abwärme an der Mündung (20) die Kühlluft mittels Sogwirkung aus dem Kühlluftkanal (9) in den Abluftkanal (16) hineinzieht.

2. Schalenverschließmaschine nach Anspruch 1, **dadurch gekennzeichnet, dass** die Temperiervorrichtung (8) zumindest abschnittsweise eine gemeinsame Trennwand (15) zwischen Kühlluftkanal (9) und Abluftkanal (16) aufweist, die oberhalb der Siegelvorrichtung (2) angeordnet ist.

3. Schalenverschließmaschine nach Anspruch 2, **dadurch gekennzeichnet, dass** die Trennwand (15) an einem Werkzeugoberteil (5) der Siegelvorrichtung (2) befestigt ist.

4. Schalenverschließmaschine nach Anspruch 2 oder 3, **dadurch gekennzeichnet, dass** die Trennwand (15) an der Mündung (20) ein Leitblech (18) aufweist.

5. Schalenverschließmaschine nach einem der vorangehenden Ansprüche, **dadurch gekennzeichnet, dass** der Kühlluftkanal (9) zwischen der Zuluftöffnung (10) und der Mündung (20) zumindest abschnittsweise mäanderförmig ausgebildet ist.

6. Schalenverschließmaschine nach einem der vorangehenden Ansprüche, **dadurch gekennzeichnet, dass** der Kühlluftkanal (9) zwischen der Zuluftöffnung (10) und der Mündung (20) zumindest abschnittsweise zum Leiten angesaugter Kühlluft in übereinander angeordneten Ebenen in Richtung zur Siegelvorrichtung (2) ausgebildet ist.

7. Schalenverschließmaschine nach einem der vorangehenden Ansprüche, **dadurch gekennzeichnet, dass** der Kühlluftkanal (9) zumindest zwei zueinander gegenläufig ausgerichtete Kühlstreckenabschnitte (9a, 9b) ausbildet.

8. Schalenverschließmaschine nach einem der vorangehenden Ansprüche, **dadurch gekennzeichnet, dass** in horizontaler Projektion der Kühlluftkanal (9) eine im Wesentlichen mindestens gleich große Fläche wie die Siegelvorrichtung (2) umfasst.

9. Schalenverschließmaschine nach einem der vorangehenden Ansprüche, **dadurch gekennzeichnet, dass** die Temperiervorrichtung (8) lüfterlos ausgeführt ist.

10. Schalenverschließmaschine nach einem der vorangehenden Ansprüche, **dadurch gekennzeichnet, dass** die Zuluftöffnung (10) in einer Rückwand (R), einer Seitenwand (S) und/oder in einem Boden (B) des Gehäuses (3) ausgebildet ist.

11. Schalenverschließmaschine nach einem der vorangehenden Ansprüche, **dadurch gekennzeichnet, dass** die Abluftöffnung (17) in einem Deckel (D) des Gehäuses (3) ausgebildet ist.

12. Schalenverschließmaschine nach einem der vorangehenden Ansprüche, **dadurch gekennzeichnet, dass** der Abluftkanal (16) einen ersten Kanalabschnitt (16a), der sich oberhalb der Siegelvorrichtung (2) erstreckt, sowie einen zweiten Kanalabschnitt (16b) aufweist, der zur Abluftöffnung (17) hin ansteigend ausgebildet ist und an einer Rückwand (R) des Gehäuses (3) mit dem ersten Kanalabschnitt (16a) verbunden ist.

13. Verfahren zum Kühlen eines Gehäuses (3) einer Schalenverschließmaschine (1), wobei ein Abluftkanal (9) von einer Siegelvorrichtung (2) der Schalenverschließmaschine (1) Abwärme aufnimmt, die innerhalb des Abluftkanals (16) eine aufsteigende Abluftströmung (A) erzeugt, welche im Abluftkanal (16) zu einer im Gehäuse (3) vorgesehenen Abluftöffnung (17) strömt, wobei der Abluftkanal (16) die aufsteigende Abluftströmung (A) an einer in ihm ausgebildeten Mündung (20) vorbeileitet, wobei an der Mündung (20) durch die daran vorbeiziehende Abluftströmung (A) eine Sogwirkung erzeugt wird, sodass aus einem mit der Mündung (20) verbundenen Kühlluftkanal (9), der entlang einer vorbestimmten Kühlungsstrecke zu einer Zuluftöffnung (10) des Gehäuses (3) führt, Kühlluft durch die Zuluftöffnung (10) in den Kühlluftkanal (9) und aus diesem durch die Mündung (20) in den Abluftkanal (16) hineingezogen wird.

14. Verfahren nach Anspruch 13, **dadurch gekennzeichnet, dass** die Kühlluft durch den Kühlluftkanal (9) zumindest abschnittsweise mäanderförmig durch das Gehäuse (3) geführt wird.

15. Verfahren nach einem der vorangehenden Ansprüche 13 oder 14, **dadurch gekennzeichnet, dass** die Abwärme in horizontaler Richtung von der Siegelvorrichtung (2) in einen an einer Rückwand (R) des Gehäuses (3) ausgebildeten aufsteigenden Kanalabschnitt (16b) des Abluftkanals (16) geleitet wird.

## Claims

1. Tray sealer (1), comprising a housing (3) with at least one supply-air opening (10) and at least one exhaust-air opening (17), a sealing device (2) and a temperature control device (8) which comprises a cooling-air channel (9) connected to the supply-air opening (10) for sucking cooling air into the interior (I) of the housing (3), and an exhaust-air channel (16) which is ascending from the sealing device (2) to the exhaust-air opening (17) for discharging exhaust heat of the sealing device (2) and in which at least one orifice (20) is provided connecting the exhaust-air channel (16) to the cooling-air channel (9), so that exhaust heat at the orifice (20) ascending in the exhaust-air channel (16) draws the cooling air by way of a suction effect out of the cooling-air channel (9) into the exhaust-air channel (16).

2. Tray sealer according to claim 1, **characterized in that** the temperature control device (8) at least sectionally comprises a common partition wall (15) between cooling-air channel (9) and exhaust-air channel (16), said partition wall being arranged above the sealing device (2).

3. Tray sealer according to claim 2, **characterized in that** the partition wall (15) is fastened to a tool upper part (5) of the sealing device (2).

4. Tray sealer according to claim 2 or 3, **characterized in that** the partition wall (15) comprises a guide plate (18) at the orifice (20).

5. Tray sealer according to any one of the preceding claims, **characterized in that** the cooling-air channel (9) between the supply-air opening (10) and the orifice (20) is configured at least sectionally in a meandering manner.

6. Tray sealer according to any one of the preceding claims, **characterized in that** the cooling-air channel (9) between the supply-air opening (10) and the orifice (20) is configured at least sectionally for conducting sucked-in cooling-air at superposed levels towards the sealing device (2).

7. Tray sealer according to any one of the preceding claims, **characterized in that** the cooling-air channel (9) forms at least two, oppositely oriented cooling route sections (9a, 9b).

8. Tray sealer according to any one of the preceding claims, **characterized in that** in a horizontal projection the cooling-air channel (9) comprises an area of substantially at least the same size as the sealing device (2).

9. Tray sealer according to any one of the preceding claims, **characterized in that** the temperature control device (9) is designed without a fan.

10. Tray sealer according to any one of the preceding claims, **characterized in that** the supply-air opening (10) is formed in a rear wall (R), a sidewall (S) and/or in a bottom (B) of the housing (3).

11. Tray sealer according to any one of the preceding claims, **characterized in that** the exhaust-air opening (17) is formed in a lid (D) of the housing (3).

12. Tray sealer according to any one of the preceding claims, **characterized in that** the exhaust-air channel (16) comprises a first channel section (16a) extending above the sealing device (2), and a second channel section (16b) which is configured to ascend towards the exhaust-air opening (17) and is connected at a rear wall (R) of the housing (3) to the first channel section (16a).

13. Method for cooling a housing (3) of a tray sealer (1), wherein an exhaust-air channel (9) takes in exhaust heat from a sealing device (2) of the tray sealer (1), said exhaust heat producing within the exhaust-air channel (16) an ascending exhaust-air stream (A) which in the exhaust-air channel (16) flows to an exhaust-air opening (17) provided in the housing (3), wherein the exhaust-air channel (16) guides the ascending exhaust-air stream (A) past an orifice (20) formed therein, wherein a suction effect is produced at the orifice (20) by the exhaust-air stream (A) passing by, so that from a cooling-air channel (9) which is connected to the orifice (20) and which leads along a predetermined cooling route to a supply-air opening (10) of the housing (3), cooling air is drawn through the supply-air opening (10) into the cooling-air channel (9) and from said channel through the orifice (20) into the exhaust-air channel (16).

14. Method according to claim 13, **characterized in that** the cooling air is guided through the cooling-air channel (9) at least sectionally in a meandering manner through the housing (3).

15. Method according to any one of the preceding claims 13 or 14, **characterized in that** the exhaust heat is passed in horizontal direction from the sealing device (2) into an ascending channel section (16b) of the exhaust-air channel (16) which is formed on a rear wall (R) of the housing (3).

## Revendications

1. Machine de fermeture de barquettes (1) comprenant un carter (3) avec au moins une ouverture d'air entrant (10) et au moins une ouverture d'air rejeté (17), un dispositif de scellage (2) ainsi qu'un dispositif de mise en température (8), qui comprend un canal d'air de refroidissement (9) relié à l'ouverture d'air entrant (10) pour aspirer de l'air de refroidissement à l'intérieur (I) du carter (3), et un canal d'air rejeté (16) ascendant, pour évacuer de la chaleur perdue du dispositif de scellage (2) à partir du dispositif de scellage (2) vers l'ouverture d'air rejeté (17), canal d'air rejeté dans lequel est prévu au moins une embouchure (20) qui relie le canal d'air rejeté (16) au canal d'air de refroidissement (9), de sorte que de la chaleur perdue ascendante dans le canal d'air rejeté (16) entraîne, au niveau de l'embouchure (20), l'air de refroidissement en provenance du canal d'air de refroidissement (9), dans le canal d'air rejeté (16), par effet d'entraînement.

2. Machine de fermeture de barquettes selon la revendication 1, **caractérisée en ce que** le dispositif de mise en température (8) présente, au moins par secteurs, entre le canal d'air de refroidissement (9) et le canal d'air rejeté (16), une paroi de séparation (15) commune, qui est agencée au-dessus du dispositif de scellage (2).

3. Machine de fermeture de barquettes selon la revendication 2, **caractérisée en ce que** la paroi de séparation (15) est fixée sur une partie supérieure d'outillage (5) du dispositif de scellage (2).

4. Machine de fermeture de barquettes selon la revendication 2 ou la revendication 3, **caractérisée en ce que** la paroi de séparation (15) comporte une tôle déflectrice (18) au niveau de l'embouchure (20).

5. Machine de fermeture de barquettes selon l'une des revendications précédentes, **caractérisée en ce que** le canal d'air de refroidissement (9) présente, entre l'ouverture d'air entrant (10) et l'embouchure (20), au moins par secteurs, une configuration en forme de méandres.

6. Machine de fermeture de barquettes selon l'une des revendications précédentes, **caractérisée en ce que** le canal d'air de refroidissement (9) est réalisé, au moins par secteurs, entre l'ouverture d'air entrant (10) et l'embouchure (20), de manière à guider de l'air de refroidissement aspiré, dans des plans superposés, en direction du dispositif de scellage (2).

7. Machine de fermeture de barquettes selon l'une des revendications précédentes, **caractérisée en ce que** le canal d'air de refroidissement (9) forme au moins deux tronçons de parcours de refroidissement (9a, 9b) orientés de manière opposée l'un à l'autre.

8. Machine de fermeture de barquettes selon l'une des revendications précédentes, **caractérisée en ce qu'**en projection horizontale, le canal d'air de refroidissement (9) englobe une surface sensiblement au moins aussi grande que le dispositif de scellage (2).

9. Machine de fermeture de barquettes selon l'une des revendications précédentes, **caractérisée en ce que** le dispositif de mise en température (8) est d'une configuration exempte de ventilateur.

10. Machine de fermeture de barquettes selon l'une des revendications précédentes, **caractérisée en ce que** l'ouverture d'air entrant (10) est réalisée dans une paroi arrière (R), une paroi latérale (S) et/ou dans un fond (B) du carter (3).

11. Machine de fermeture de barquettes selon l'une des revendications précédentes, **caractérisée en ce que** l'ouverture d'air rejeté (17) est réalisée dans un couvercle (D) du carter (3).

12. Machine de fermeture de barquettes selon l'une des revendications précédentes, **caractérisée en ce que** le canal d'air rejeté (16) présente un premier tronçon de canal (16a), qui s'étend au-dessus du dispositif de scellage (2), ainsi qu'un deuxième tronçon de canal (16b), qui est réalisé de manière à être ascendant vers l'ouverture d'air rejeté (17), et est relié au premier tronçon de canal (16a) au niveau d'une paroi arrière (R) du carter (3).

13. Procédé pour refroidir un carter (3) d'une machine de fermeture de barquettes (1),
d'après lequel un canal d'air rejeté (16) absorbe de la chaleur perdue, qui provient d'un dispositif de scellage (2) de la machine de fermeture de barquettes (1), et engendre à l'intérieur du canal d'air rejeté (16) un écoulement d'air rejeté ascendant (A), qui s'écoule dans le canal d'air rejeté (16) vers une ouverture d'air rejeté (17) prévue dans le carter (3),
d'après lequel le canal d'air rejeté (16) fait circuler l'écoulement d'air rejeté ascendant (A) par-delà une embouchure (20) qui y est formée,
et d'après lequel au niveau de l'embouchure (20) est engendré un effet d'entraînement par l'écoulement d'air rejeté ascendant (A) y circulant, de sorte qu'à partir d'un canal d'air de refroidissement (9) relié à l'embouchure (20) et conduisant à une ouverture d'air entrant (10) du carter (3) le long d'un parcours de refroidissement prédéterminé, de l'air de refroidissement est entraîné à l'intérieur, à travers l'ouverture d'air entrant (10), dans le canal d'air de refroidissement (9) et de là, à travers l'embouchure (20), dans le canal d'air rejeté (16).

14. Procédé selon la revendication 13, **caractérisé en ce que** l'air de refroidissement est guidé à travers le carter (3) par le canal d'air de refroidissement (9) selon une configuration en forme de méandres, au moins par secteurs.

15. Procédé selon l'une des revendications précédentes 13 ou 14, **caractérisé en ce que** la chaleur perdue est dirigée, en direction horizontale à partir du dispositif de scellage (2), dans un tronçon de canal (16b) ascendant du canal d'air rejeté (16), qui est réalisé sur une paroi arrière (R) du carter (3).
